# EUROPEAN PATENT APPLICATION

(11) **EP 4 668 903 A1**
(43) Date of publication of application: **24.12.2025**
(21) Application number: 24757186.2
(22) Date of filing: 13.02.2024
(51) Int. Cl.: H04W 52/24, H04W 52/38, H04W 24/08, H04W 24/10, H04W 92/18

(54) **POWER CONTROL METHOD AND DEVICE FOR DEVICE-TO-DEVICE COMMUNICATION BASED ON MULTI-PANEL TRANSMISSION AND RECEPTION**

(30) Priority: 14.02.2023 KR 20230019287
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR)
(74) Representative: Jung, Minkyu
(86) International application number: PCT/KR2024/002028
(87) International publication number: WO 2024/172459

(57) **Abstract**

Disclosed is a method for operating a first device (100) in a wireless communication system. The method may comprise the steps of: determining, as a transmission power value, the larger value among a first power value determined on the basis of a first reference signal reception power value related to a first spatial setting and a second power value determined on the basis of a second reference signal reception power value related to a second spatial setting; performing a first device-to-device transmission on the basis of the transmission power value and the first spatial setting; and performing a second device-to-device transmission on the basis of the transmission power value and the second spatial setting.

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

According to an embodiment of the present disclosure, a method for performing, by a first device, wireless communication may be proposed. For example, the method may comprise: determining a first power value, based on a first reference signal received power value related to a first spatial setting; determining a second power value, based on a second reference signal received power value related to a second spatial setting; determining a greater value among the first power value and the second power value as a transmit power value; performing a first inter-device transmission, based on the transmit power value and the first spatial setting; and performing a second inter-device transmission, based on the transmit power value and the second spatial setting.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: determining a first power value, based on a first reference signal received power value related to a first spatial setting; determining a second power value, based on a second reference signal received power value related to a second spatial setting; determining a greater value among the first power value and the second power value as a transmit power value; performing a first inter-device transmission, based on the transmit power value and the first spatial setting; and performing a second inter-device transmission, based on the transmit power value and the second spatial setting.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: determining a first power value, based on a first reference signal received power value related to a first spatial setting; determining a second power value, based on a second reference signal received power value related to a second spatial setting; determining a greater value among the first power value and the second power value as a transmit power value; performing a first inter-UE transmission, based on the transmit power value and the first spatial setting; and performing a second inter-UE transmission, based on the transmit power value and the second spatial setting.

According to an embodiment of the present disclosure, a non-transitory computer-readable storage medium storing instructions may be proposed. For example, the instructions, based on being executed, may cause a first device to: determine a first power value, based on a first reference signal received power value related to a first spatial setting; determine a second power value, based on a second reference signal received power value related to a second spatial setting; determine a greater value among the first power value and the second power value as a transmit power value; perform a first inter-device transmission, based on the transmit power value and the first spatial setting; and perform a second inter-device transmission, based on the transmit power value and the second spatial setting.

According to an embodiment of the present disclosure, a method for performing, by a second device, wireless communication may be proposed. For example, the method may comprise: receiving, from a first device, a first inter-device transmission based on a third spatial setting; and receiving, from the first device, a second inter-device transmission based on a fourth spatial setting, wherein the first inter-device transmission and the second inter-device transmission may be performed based on the same transmit power value, and wherein the transmit power value may be a greater value among a first power value determined based on a first reference signal received power value related to a first spatial setting on which the first inter-device transmission is based and a second power value determined based on a second reference signal received power value related to a second spatial setting on which the second inter-device transmission is based.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: receiving, from a first device, a first inter-device transmission based on a third spatial setting; and receiving, from the first device, a second inter-device transmission based on a fourth spatial setting, wherein the first inter-device transmission and the second inter-device transmission may be performed based on the same transmit power value, and wherein the transmit power value may be a greater value among a first power value determined based on a first reference signal received power value related to a first spatial setting on which the first inter-device transmission is based and a second power value determined based on a second reference signal received power value related to a second spatial setting on which the second inter-device transmission is based.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows an example of an NTN typical scenario based on a transparent payload, according to one embodiment of the present disclosure.
FIG. 4 shows an example of an NTN typical scenario based on a regenerative payload, according to one embodiment of the present disclosure.
FIG. 5 shows an example of a sensing operation, according to one embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows a potential issue in the interpretation of reference signal received power at a receiving UE when two inter-UE channel state information reference signals (e.g., SL CSI-RS) are transmitted based on different spatial settings, according to related art.
FIG. 10 shows an embodiment for clearly identifying the reason why two reference signal received power values differ, according to an embodiment of the present disclosure.
FIG. 11 shows a procedure for a first device to perform wireless communication, according to one embodiment of the present disclosure.
FIG. 12 shows a procedure for a second device to perform wireless communication, according to one embodiment of the present disclosure.
FIG. 13 shows a communication system 1, based on an embodiment of the present disclosure.
FIG. 14 shows wireless devices, based on an embodiment of the present disclosure.
FIG. 15 shows a signal process circuit for a transmission signal, based on an embodiment of the present disclosure.
FIG. 16 shows another example of a wireless device, based on an embodiment of the present disclosure.
FIG. 17 shows a hand-held device, based on an embodiment of the present disclosure.
FIG. 18 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

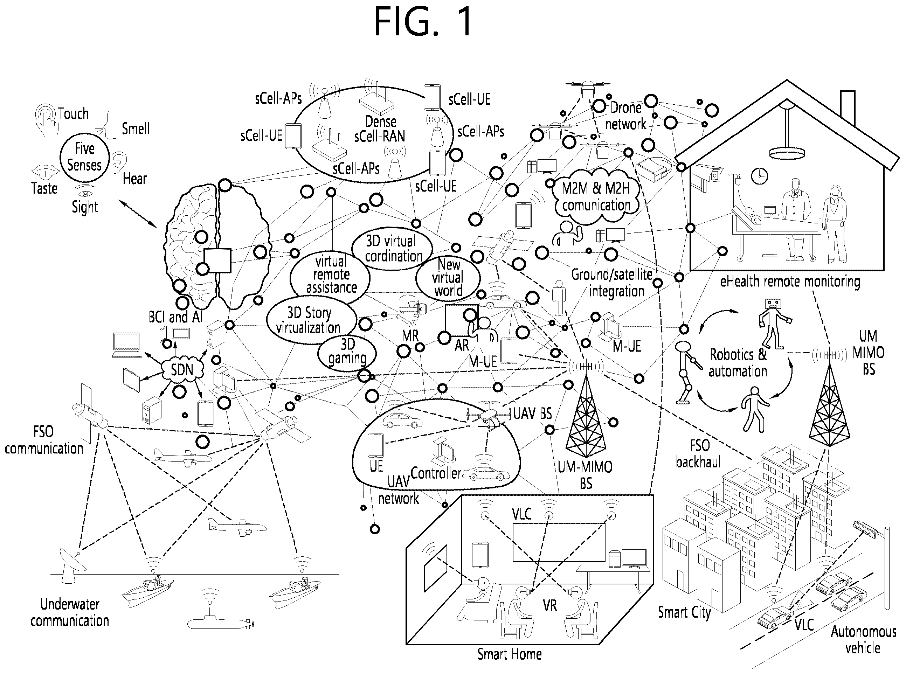

FIG. 1 shows a communication structure that can be provided in a 6G system, according to one embodiment of the present disclosure. The embodiment of FIG. 1 may be combined with various embodiments of the present disclosure.

In 6G, new network features may include the follows.
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

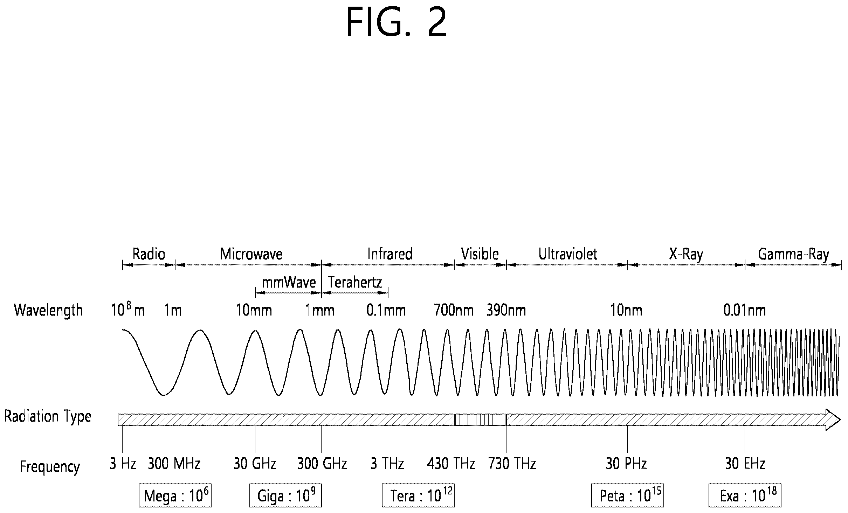

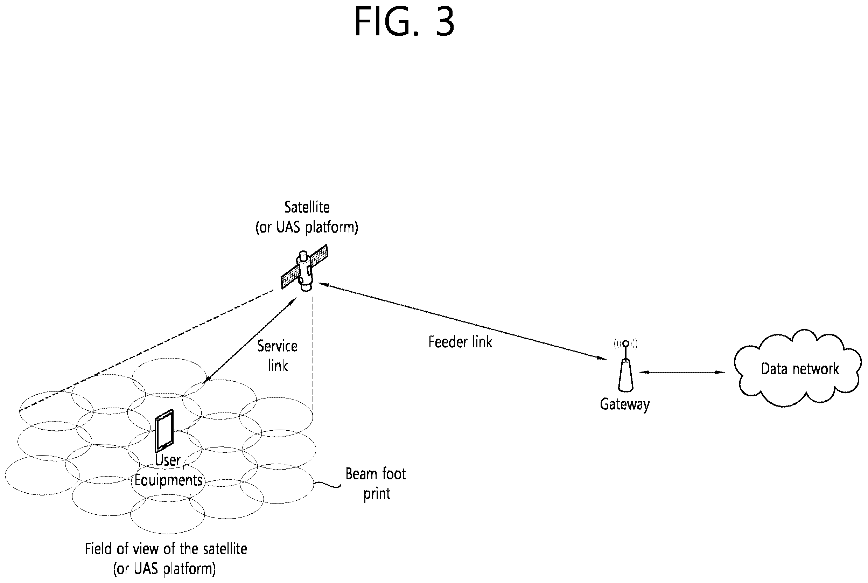

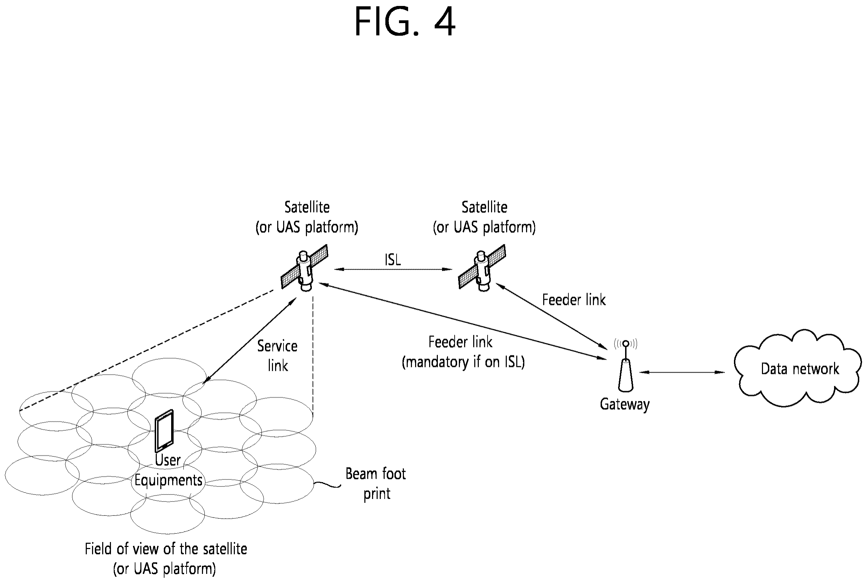

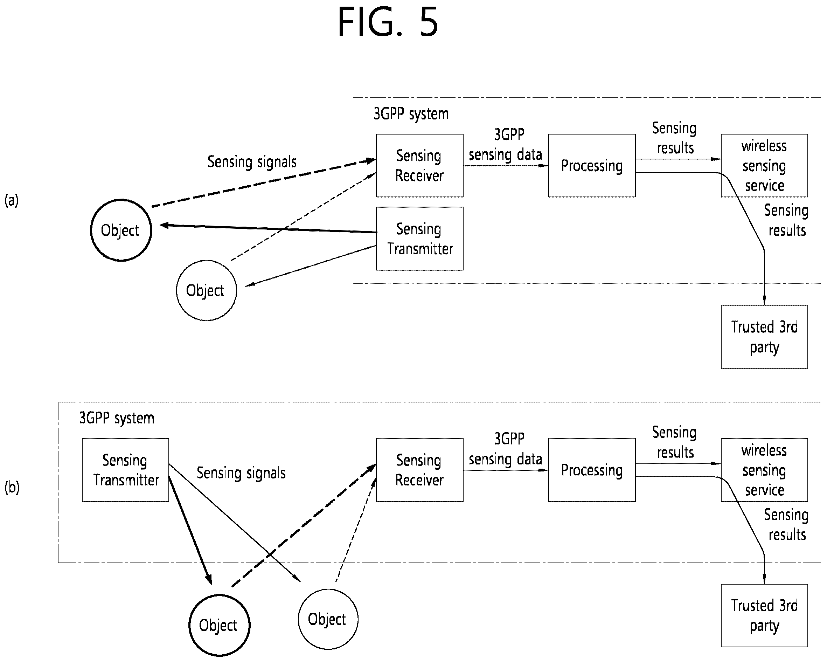

The following describes the core implementation technologies for 6G systems.
- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.
- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).
- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, i.e., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), the number of slots per frame (N^{frame,u}ₛₗₒₜ), and the number of slots per subframe (N^{subframe,u}ₛₗₒₜ), according to an SCS configuration (u), when Normal CP or Extended CP is used.

**[Table 2]**

| CP Type | SCS (15*2^{u}) | N^{slot}_{symb} | N^{frame,u}ₛₗₒₜ | N^{subframe,u}ₛₗₒₜ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

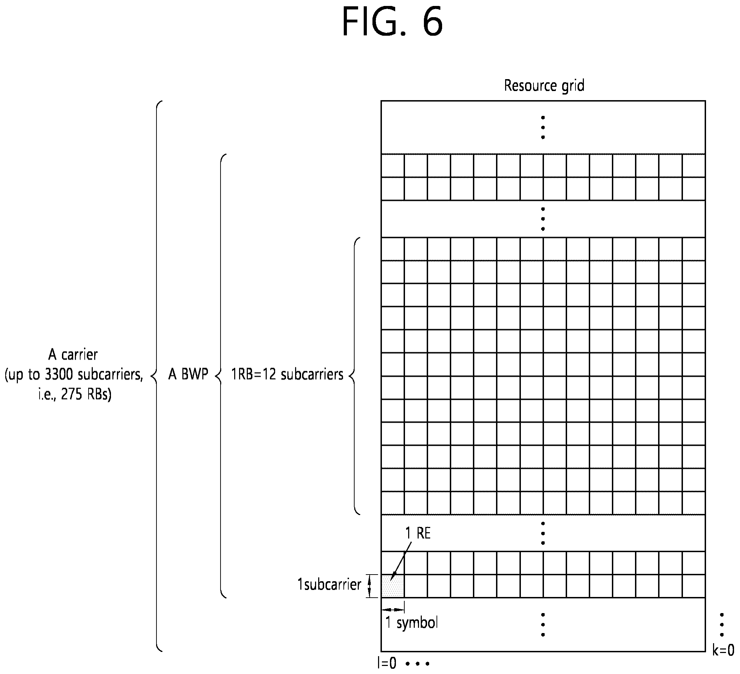

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

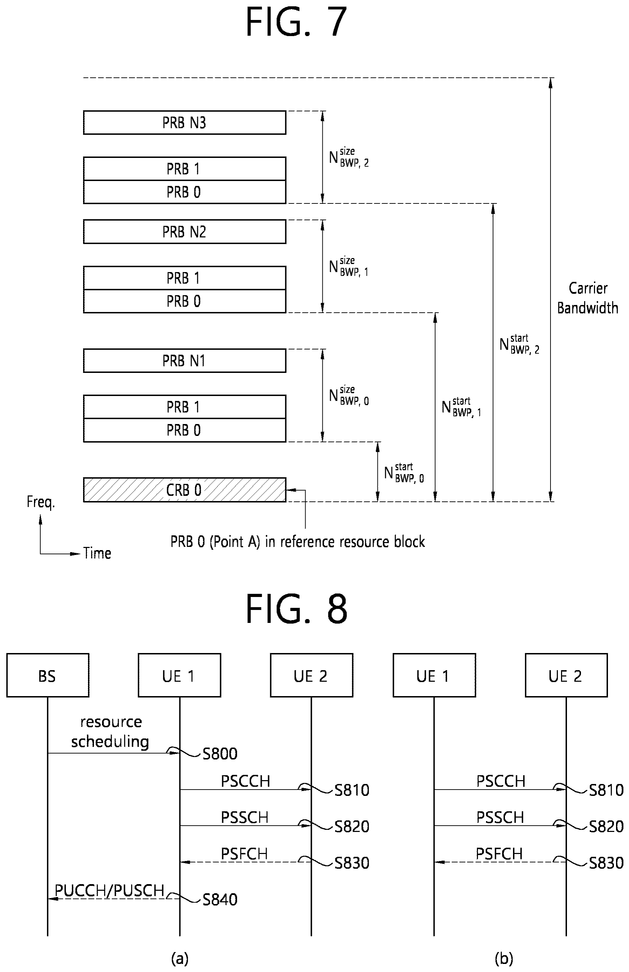

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

On the other hand, in inter-UE (e.g., SL) communication, a UE may perform transmission and/or reception based on multiple panels and/or beam directions, and in this case, it may be necessary to define a method for managing spatial settings, such as beam-related information or a spatial domain transmission/reception filter domain.

Meanwhile, in the case of downlink, a base station was able to indicate antenna port quasi-co-location (QCL) information to a UE via a transmission configuration indicator, and in particular, when receiving a downlink signal, the base station was able to configure/indicate whether the UE should assume that spatial reception parameters or beam information are the same as those of a specific synchronization block (e.g., SSB) or a channel state information reference signal (e.g., CSI-RS).

Meanwhile, in the case of uplink, a base station was able to configure/indicate to a UE that a spatial setting or a spatial domain transmission filter for transmitting a physical uplink shared channel (e.g., PUSCH) follows a spatial setting for transmitting a specific sounding reference signal (e.g., SRS) of the UE, transmitting a physical random access channel (e.g., PRACH), and/or receiving a downlink (e.g., DL) signal.

Meanwhile, in the case of power control for uplink (e.g., UL) transmission, a value could vary depending on a reference signal (e.g., RS) used for pathloss estimation, transmission configuration indicator (e.g., TCI) information, and/or beam information, and if it is not an optimal beam, the estimated pathloss value could become greater, resulting in higher power.

Meanwhile, when the reference signal (e.g., RS) and/or transmission spatial setting (setting) used for pathloss estimation differ per inter-UE channel state information reference signal (e.g., SL CSI-RS), it may be difficult to determine whether a channel state information (e.g., CSI) measurement value (e.g., an RSRP value) based on the inter-UE channel state information reference signal (e.g., SL CSI-RS) differs due to a difference in the transmission spatial setting or due to a difference in power control operation. That is, when a reference signal received power (e.g., RSRP) measurement value (L1) is high, it may be difficult to determine whether it is high because the corresponding beam information or spatial setting is optimal, or because the transmit power is high and the measurement value reflects that; additionally, optimal beam or spatial setting information may be misidentified.

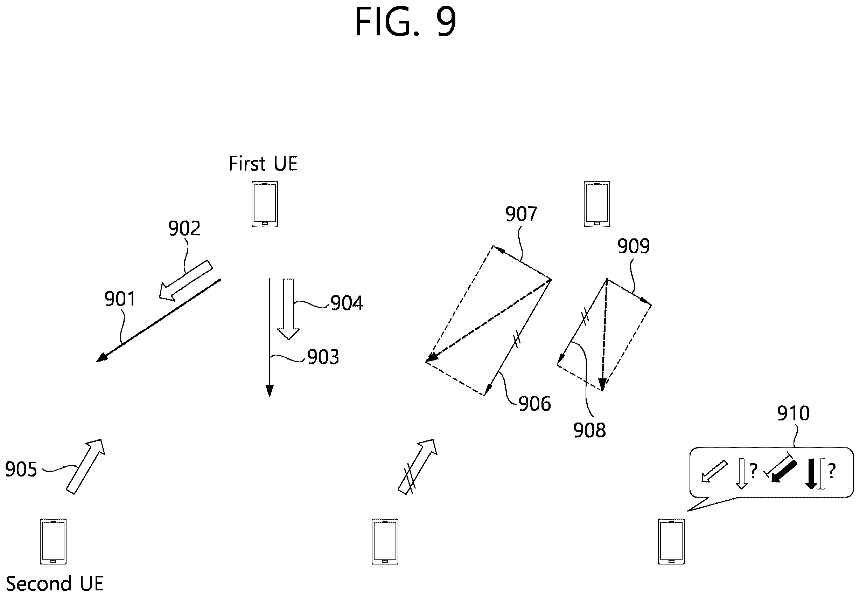

FIG. 9 shows a potential issue in the interpretation of reference signal received power at a receiving UE when two inter-UE channel state information reference signals (e.g., SL CSI-RS) are transmitted based on different spatial settings, according to related art. Various embodiments of the present disclosure may provide a solution to the issue shown in FIG. 9.

Referring to FIG. 9, a second UE that intends to measure channel state information and a first UE that transmits reference signals which can be used for the measurement of the channel state information are shown.

For example, 901 may be a first reference signal transmitted by a first UE, and the first reference signal may be transmitted based on a first spatial setting having a beam direction 902. For example, 903 may be a second reference signal transmitted by the first UE, and the second reference signal may be transmitted based on a second spatial setting having a beam direction 904.

For example, 905 may show a beam direction of a third spatial setting (reception spatial setting) used by the second UE for a reception operation.

For example, 906 and 907 show, respectively, a signal component of the first reference signal that the second UE can receive based on the beam direction 905, and a signal component that the second UE cannot receive. For example, 906 may be parallel to 905. For example, 906 and 907 may be orthogonal.

For example, 908 and 909 show, respectively, a signal component of the second reference signal that the second UE can receive based on the beam direction 905, and a signal component that the second UE cannot receive. For example, 908 may be parallel to 909. For example, 908 and 909 may be orthogonal.

For example, here, the second UE may derive a first reference signal received power value based on the received 906, and may derive a second reference signal received power value based on the received 908.

Here (910), when the first reference signal received power value and the second reference signal received power value are different, the second UE may not be able to accurately determine the reason why the two reference signal received power values differ. This is because the beam directions 902 and 904 used to derive the two reference signal received power values, as well as the magnitude of 901 (i.e., the transmit power of the first reference signal) and the magnitude of 903 (i.e., the transmit power of the second reference signal), which represent the transmit power levels, are all different in 901 and 903.

For example, when a first UE determines transmit power values of reference signals differently according to each spatial setting as described above, a UE that receives the reference signals may have difficulty accurately identifying pathloss based on the reference signal received power values.

According to an embodiment of the present disclosure, a receiving UE may measure (L3-filtered) reference signal received power (e.g., RSRP) per beam process ID, per transmission spatial setting applied to an inter-UE physical control channel demodulation reference signal (e.g., PSCCH DMRS) and an inter-UE physical shared channel demodulation reference signal (e.g., PSSCH DMRS), and/or per reception spatial setting when receiving the inter-UE physical control channel demodulation reference signal (e.g., PSCCH DMRS) and/or the inter-UE physical shared channel demodulation reference signal (e.g., PSSCH DMRS), and may report the reference signal received power to a transmitting UE.

For example, a receiving UE may report only a subset of the (L3-filtered) reference signal received power (e.g., RSRP) measurement values to a transmitting UE, and the reference signal received power (e.g., RSRP) measurement value to be reported may be selected among those having a high value and/or those equal to or greater than a (pre-)configured threshold value. And/or, for example, at least one of a beam process ID corresponding to the reference signal received power (e.g., RSRP) measurement value, inter-UE physical channel (e.g., PSCCH/PSSCH) information, transmission spatial setting information, and/or reception spatial setting information may be reported together with the subset of the reference signal received power measurement values.

For example, a receiving UE may measure a received signal strength indicator (e.g., RSSI) per beam process ID, and/or per transmission spatial setting applied to an inter-UE physical control channel demodulation reference signal (e.g., PSSCH DMRS) and/or an inter-UE physical shared channel demodulation reference signal (e.g., PSSCH DMRS), and/or per reception spatial setting at the time of signal reception in a slot, and may perform measurement value management.

For example, when receiving an inter-UE physical channel (e.g., PSCCH/PSSCH), a receiving UE may measure (L3-filtered) reference signal received power (e.g., RSRP) based on a plurality of inter-UE physical shared channel demodulation reference signals (e.g., PSSCH DMRS) corresponding to different beam process IDs and/or transmission spatial settings, and may report the measured reference signal received power to a transmitting UE.

For example, when a transmitting UE performs power control for an inter-UE physical channel (e.g., PSCCH/PSSCH), and/or determines power based on inter-UE communication (e.g., SL) pathloss, a beam process ID for inter-UE physical channel (e.g., PSCCH/PSSCH) transmission, (L3-filtered) reference signal received power (e.g., RSRP) value used according to the transmission spatial setting, and/or a reference power value may differ. For example, the (L3-filtered) reference signal received power (e.g., RSRP) value and/or the reference power value used for the power control may be a value measured based on an inter-UE physical shared channel demodulation reference signal (e.g., PSSCH DMRS) that is the same as (or related to) the transmission spatial setting that the transmitting UE applies for transmission.

For example, when a transmitting UE controls power for an inter-UE physical channel (e.g., PSCCH/PSSCH), and/or determines power based on inter-UE communication (e.g., SL) pathloss, the power control and/or power determination may be independent of a beam process ID and/or a transmission spatial setting for inter-UE physical channel (e.g., PSCCH/PSSCH) transmission. That is, the beam process ID and/or transmission spatial setting for inter-UE physical channel (e.g., PSCCH/PSSCH) transmission may not be considered in the power control and/or power determination.

For example, when a transmitting UE controls power for inter-UE physical channel (e.g., PSCCH/PSSCH) transmission using a first transmission spatial setting, a reference signal received power (e.g., RSRP) measurement/report value based on an inter-UE physical shared channel demodulation reference signal (e.g., PSSCH DMRS) to which a transmission spatial setting different from the first transmission spatial setting is applied may be used as a power value (or for determining a power value).

For example, when a transmitting UE controls power for an inter-UE physical channel (e.g., PSCCH/PSSCH), and/or determines power based on inter-UE communication (e.g., SL) pathloss, the transmit power may be determined based on at least one of the greatest value among the (L3-filtered) reference signal received power (e.g., RSRP) measurement/report values, one or more values equal to or greater than a (pre-)configured threshold value, and/or a corresponding reference power value to it.

For example, when a transmitting UE controls power for an inter-UE physical channel (e.g., PSCCH/PSSCH), and/or determines power based on inter-UE communication (e.g., SL) pathloss, a power value may be determined as a minimum value, maximum value, or average value among power values derived from (L3-filtered) reference signal received power (e.g., RSRP) measurement/report values related to different beam process IDs and/or transmission spatial settings, and/or from reference power values.

For example, the (L3-filtered) reference signal received power (e.g., RSRP) measurement/report values and/or reference power values used for calculating the average value or minimum value among the power values derived from reference power may be limited such that the reference signal received power (e.g., RSRP) measurement/report value is equal to or greater than a (pre-)configured threshold value, and to the corresponding reference power values.

For example, the (L3-filtered) reference signal received power (e.g., RSRP) measurement/report values and/or reference power values used for calculating the average value, minimum value, or maximum value among the power values derived from reference power may be limited to those related to all or part of the target transmission spatial settings to be used within a transmission slot of a transmitting UE.

In various embodiments of the present disclosure, the (application) method of the various embodiments may differ depending on the purpose of reference signal received power (e.g., RSRP) measurement and/or received signal strength indicator (e.g., RSSI) measurement by a UE.

For example, when a transmitting UE performs inter-UE physical channel (e.g., PSCCH/PSSCH) transmission or within a slot, if a plurality of transmission spatial settings are applied (in a time division multiplexing (e.g., TDM) manner), the transmit power may not be changed or may not be increased over time.

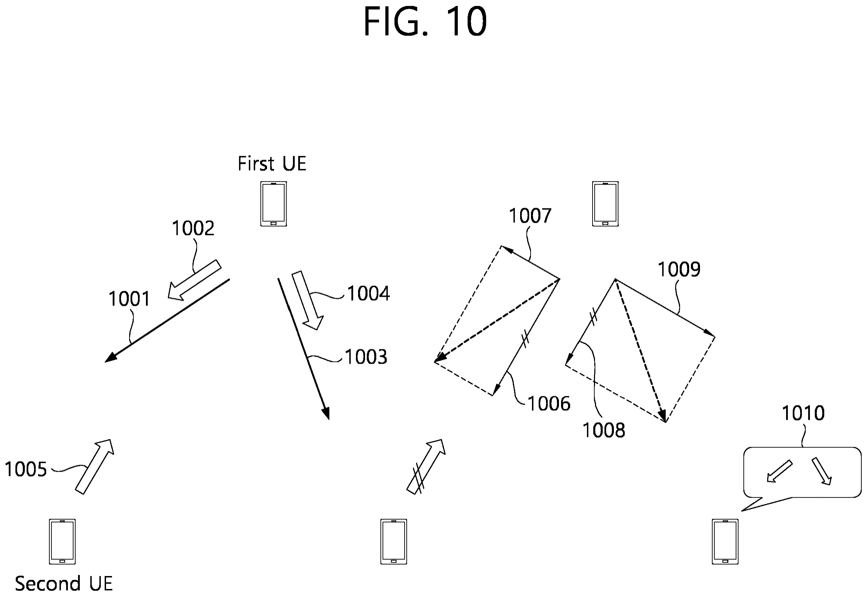

FIG. 10 shows an embodiment for clearly identifying the reason why two reference signal received power values differ, according to an embodiment of the present disclosure. The embodiment of FIG. 10 may be combined with various embodiments of the present disclosure.

Referring to FIG. 10, a second UE that intends to measure channel state information and a first UE that transmits reference signals which can be used for the measurement of the channel state information are shown.

For example, 1001 may be a first reference signal transmitted by a first UE, and the first reference signal may be transmitted based on a first spatial setting having a beam direction 1002. For example, 1003 may be a second reference signal transmitted by the first UE, and the second reference signal may be transmitted based on a second spatial setting having a beam direction 1004.

Here, the magnitude of the first reference signal and the magnitude of the second reference signal may be the same. That is, the transmit power value of the first reference signal and the transmit power value of the second reference signal may be the same. Therefore, for example, the first reference signal and the second reference signal may differ only in the beam direction related to each transmission.

For example, 1005 may show a beam direction of a third spatial setting (reception spatial setting) used by the second UE for a reception operation.

For example, 1006 and 1007 show, respectively, a signal component of the first reference signal that the second UE can receive and a signal component that the second UE cannot receive based on the beam direction 1005. For example, 1006 may be parallel to 1005. For example, 1006 and 1007 may be orthogonal.

For example, 1008 and 1009 show, respectively, a signal component of the second reference signal that the second UE can receive and a signal component that the second UE cannot receive based on the beam direction 1005. For example, 1008 may be parallel to 1009. For example, 1008 and 1009 may be orthogonal.

For example, here, the second UE may derive a first reference signal received power value based on the received 1006, and may derive a second reference signal received power value based on the received 1008. Here, the second UE may know that the transmit power of the first reference signal and the transmit power of the second reference signal are the same.

Here (1010), when the first reference signal received power value and the second reference signal received power value are different, the second UE may recognize that the difference between the two reference signal received power values is due to the difference between the beam direction 1002 associated with the transmission of the first reference signal and the beam direction 1004 associated with the transmission of the second reference signal. This may be because the transmit power of the first reference signal and the transmit power of the second reference signal are the same, and thus the only factor that can affect the derivation of the reference signal received power is the beam direction.

For example, as described above, even when each spatial setting is different, by having the first UE determine the transmit power values of the reference signals to be the same, a UE receiving the reference signals may identify pathloss relatively clearly based on the reference signal received power values.

The various schemes of the present disclosure may be differently applied per unicast session (group), cast type, transmission priority value, reception priority value, an inter-UE transmission (e.g., SL transmission) for which an inter-UE HARQ-ACK (e.g., SL HARQ-ACK) feedback is enabled/disabled, inter-UE HARQ-ACK (e.g., SL HARQ-ACK) feedback option, QoS parameter, (remaining) PDB, congestion control level, the mobility related information per (transmission and/or reception) resource pool (for example, the speed, the velocity, the direction, the acceleration, the position, the height, etc.), sidelink transmission or a reception, HARQ process, beam process, source ID, destination ID, and/or TB. For example, in various embodiments of the present disclosure, the unit of the (pre-)configuration may be configured in the form of different combinations of the above.

For example, in embodiments of the present disclosure, a parameter indication and management via an inter-UE physical control channel (e.g., PSCCH) and/or inter-UE physical shared channel (e.g., PSSCH) may be performed as a unit in the form of any of the above different combinations.

In various embodiments of the present disclosure, a spatial setting, transmission configuration indicator (e.g., TCI) information, and/or QCL information may refer to each other. For example, a spatial setting, transmission configuration indicator (e.g., TCI) information, and/or QCL information may be substituted and interpreted as information related to a beam, beam direction, spatial domain transmission, or reception filter, etc.

In various embodiments of the present disclosure, for example, having the same spatial setting information for a transmission may mean that the spatial domain transmission filter of a UE is the same for the two different transmission signals.

In various embodiments of the present disclosure, for example, having the same spatial setting information for a reception may mean that the two different reception signals are a QCL 'TypeD' relationship. And/or, for example, having the same spatial setting information for a reception may mean that the two different signals use the same spatial reception parameters.

In various embodiments of the present disclosure, for example, a (pre-)configuration may refer to a pre-configuration (based on signaling from a server or at the time of product shipment), a configuration from a base station, or a configuration via inter-UE PC5-RRC.

The various methods of this disclosure may be applied differently to different inter-UE communication (e.g., SL) channels. The various methods of the present disclosure may be applied differently according to the type of information included in an inter-UE channel (e.g., SL channel).

The methods proposed above may be applied to devices described below. First, a processor 202 of a receiving UE may configure at least one bandwidth part (e.g., BWP). Then, a processor 202 of a receiving UE may control a transceiver 206 of the receiving UE to receive an inter-UE communication (e.g., SL communication)-related physical channel and/or an inter-UE communication (e.g., SL communication)-related reference signal from a transmitting UE on the at least one bandwidth part (e.g., BWP).

When inter- UE communication (e.g., SL communication) is performed in FR2, a UE may perform a transmission and/or reception operation based on multiple panels and/or beam directions. Here, a spatial setting may need to be defined, which may include beam-related information or a spatial domain transmission/reception filter or the like.

For example, since both the spatial setting and the channel condition (pathloss) can affect the measurement of the reference signal received power (e.g., RSRP) value used as the basis for measuring pathloss, and each inter-UE physical channel (e.g., PSCCH/PSSCH) transmission may be performed based on an independent spatial setting, when the reference signal received power (e.g., RSRP) value reported by a receiving UE differs across multiple transmissions (with different spatial settings), there is a problem where the transmitting UE may not be able to determine whether the difference in the reference signal received power (e.g., RSRP) value is due to the spatial setting or the channel condition.

That is, for example, when the transmit power of an inter-UE communication (e.g., SL) channel changes depending on the transmission spatial setting, the accuracy of beam quality measurement at the receiving UE may decrease. This may be because it is ambiguous whether the variation in the measurement result is due to power change or beam quality.

According to an embodiment of the present disclosure, when a transmitting UE determines power for an inter-UE physical channel (e.g., PSCCH/PSSCH) based on inter-UE communication (e.g., SL communication) pathloss, the power value may be determined as a maximum value among power values derived from (L3-filtered) reference signal received power (e.g., RSRP) measurement/report values and/or reference power values related to different beam process IDs and/or transmission spatial settings.

For example, when determining the transmit power for an inter-UE physical channel (e.g., PSCCH/PSSCH), a transmitting UE may use the greatest value among power values derived based on reference signal received power (e.g., RSRP) values respectively associated with a plurality of spatial settings as the transmit power. For example, the transmit power of an inter-UE communication (e.g., SL communication) channel may be determined based on a pathloss value that is independent of the current transmission spatial setting. For example, the transmit power may be determined among the minimum/maximum/average power values for various transmission spatial settings.

According to various embodiments of the present disclosure, when a UE performs a plurality of transmissions with different spatial settings, by using the greatest value among transmit power values determined based on reference signal received power (e.g., RSRP) values respectively associated with the plurality of spatial settings for transmission, the received reference signal received power (e.g., RSRP) value may be interpreted as fully reflecting the channel condition, and therefore, more accurate pathloss calculation may be enabled. Accordingly, the accuracy of beam quality measurement may be improved.

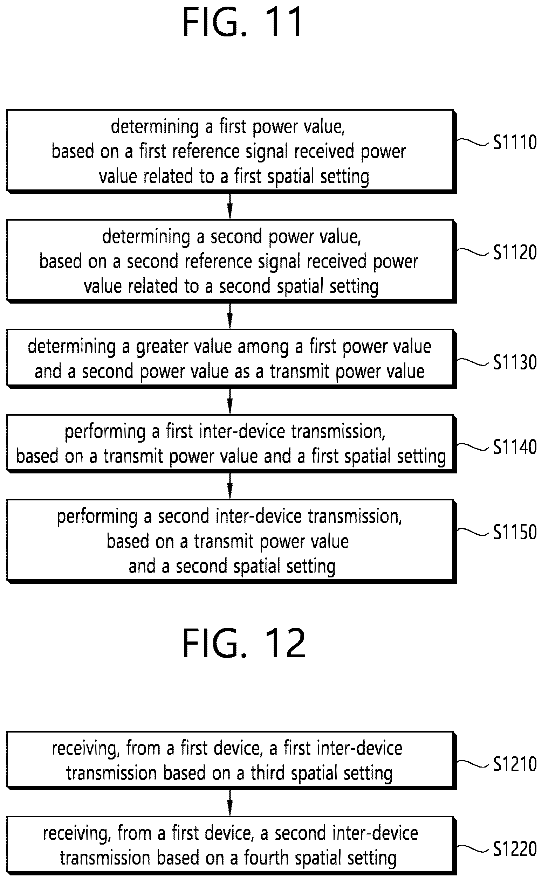

FIG. 11 shows a procedure for performing wireless communication by a first device according to an embodiment of the present disclosure. The embodiment of FIG. 11 may be combined with various embodiments of the present disclosure.

Referring to FIG. 11, in step S1110, a first device may determine a first power value, based on a first reference signal received power value related to a first spatial setting. In step S1120, the first device may determine a second power value, based on a second reference signal received power value related to a second spatial setting. In step S1130, the first device may determine a greater value among the first power value and the second power value as a transmit power value. In step S1140, the first device may perform a first inter-device transmission, based on the transmit power value and the first spatial setting. In step S1150, the first device may perform a second inter-device transmission, based on the transmit power value and the second spatial setting.

For example, the first power value may be determined based on a first pathloss value related to the first spatial setting and the first reference signal received power value, and the second power value may be determined based on a second pathloss value related to the second spatial setting and the second reference signal received power value.

For example, the first pathloss value may be determined based on a first channel state information reference signal received based on the first spatial setting, and the second pathloss value may be determined based on a second channel state information reference signal received based on the second spatial setting.

For example, the first reference signal received power value and the second reference signal received power value may be L3 filtered values.

For example, the first inter-device transmission and the second inter-device transmission may be performed at the same slot.

For example, the first inter-device transmission and the second inter-device transmission may be transmitted based on time division multiplexing.

For example, the first reference signal received power value may be determined based on a first beam process ID related to the first spatial setting, and the second reference signal received power value may be determined based on a second beam process ID related to the second spatial setting.

For example, the first inter-device transmission and the second inter-device transmission may be transmitted to a second device, the first inter-device transmission may include a first reference signal transmission based on the first spatial setting, and the second inter-device transmission may include a second reference signal transmission based on the second spatial setting.

For example, the first reference signal transmission may be a first channel state information reference signal transmission or a first inter-device physical channel demodulation signal transmission, and the second reference signal transmission may be a second channel state information reference signal transmission or a second inter-device physical channel demodulation signal transmission.

For example, additionally, the first device may receive, from the second device, information related to a reference signal received power value. For example, the information related to a reference signal received power value may include information for a third reference signal received power value, information for a fourth reference signal received power value, information for a third spatial setting, and information for a fourth spatial setting.

For example, the third reference signal received power value may be obtained based on the first reference signal transmission, received based on the third spatial setting, and the fourth reference signal received power value may be obtained based on the second reference signal transmission, received based on the fourth spatial setting.

For example, the third reference signal received power value may be obtained based on a third beam process ID related to the third spatial setting and the first reference signal transmission, the fourth reference signal received power value may be obtained based on a fourth beam process ID related to the fourth spatial setting and the second reference signal transmission, and information related to a reference signal received power value may include information for the third beam process ID and information for the fourth beam process ID.

For example, additionally, the first device may receive, from a second device, a first reference signal based on the first spatial setting; receive, from the second device, a second reference signal based on the second spatial setting; and transmit, to the second device, information related to a reference signal received power value. For example, the first reference signal received power value may be obtained based on the first reference signal, the second reference signal received power value may be obtained based on the second reference signal, and the information related to a reference signal received power value may include information for the first reference signal received power value, information for the second reference signal received power value, information for the first spatial setting, and information for the second spatial setting.

The above-described embodiment may be applied to various devices described below. For example, a processor 102 of a first device 100 may determine a first power value, based on a first reference signal received power value related to a first spatial setting. And, the processor 102 of the first device 100 may determine a second power value, based on a second reference signal received power value related to a second spatial setting. And, the processor 102 of the first device 100 may determine a greater value among the first power value and the second power value as a transmit power value. And, the processor 102 of the first device 100 may control a transceiver 106 to perform a first inter-device transmission, based on the transmit power value and the first spatial setting. And, the processor 102 of the first device may control the transceiver 106 to perform a second inter-device transmission, based on the transmit power value and the second spatial setting.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: determining a first power value, based on a first reference signal received power value related to a first spatial setting; determining a second power value, based on a second reference signal received power value related to a second spatial setting; determining a greater value among the first power value and the second power value as a transmit power value; performing a first inter-device transmission, based on the transmit power value and the first spatial setting; and performing a second inter-device transmission, based on the transmit power value and the second spatial setting.

For example, the first power value may be determined based on a first pathloss value related to the first spatial setting and the first reference signal received power value, and the second power value may be determined based on a second pathloss value related to the second spatial setting and the second reference signal received power value.

For example, the first pathloss value may be determined based on a first channel state information reference signal received based on the first spatial setting, and the second pathloss value may be determined based on a second channel state information reference signal received based on the second spatial setting.

For example, the first reference signal received power value and the second reference signal received power value may be L3 filtered values.

For example, the first inter-device transmission and the second inter-device transmission may be performed at the same slot.

For example, the first inter-device transmission and the second inter-device transmission may be transmitted based on time division multiplexing.

For example, the first reference signal received power value may be determined based on a first beam process ID related to the first spatial setting, and the second reference signal received power value may be determined based on a second beam process ID related to the second spatial setting.

For example, the first inter-device transmission and the second inter-device transmission may be transmitted to a second device, the first inter-device transmission may include a first reference signal transmission based on the first spatial setting, and the second inter-device transmission may include a second reference signal transmission based on the second spatial setting.

For example, the first reference signal transmission may be a first channel state information reference signal transmission or a first inter-device physical channel demodulation signal transmission, and the second reference signal transmission may be a second channel state information reference signal transmission or a second inter-device physical channel demodulation signal transmission.

For example, additionally, the instructions may further comprise: receiving, from the second device, information related to a reference signal received power value. For example, the information related to a reference signal received power value may include information for a third reference signal received power value, information for a fourth reference signal received power value, information for a third spatial setting, and information for a fourth spatial setting.

For example, the third reference signal received power value may be obtained based on the first reference signal transmission, received based on the third spatial setting, and the fourth reference signal received power value may be obtained based on the second reference signal transmission, received based on the fourth spatial setting.

For example, the third reference signal received power value may be obtained based on a third beam process ID related to the third spatial setting and the first reference signal transmission, the fourth reference signal received power value may be obtained based on a fourth beam process ID related to the fourth spatial setting and the second reference signal transmission, and information related to a reference signal received power value may include information for the third beam process ID and information for the fourth beam process ID.

For example, additionally, the instructions may further comprise: receiving, from a second device, a first reference signal based on the first spatial setting; receiving, from the second device, a second reference signal based on the second spatial setting; and transmitting, to the second device, information related to a reference signal received power value. For example, the first reference signal received power value may be obtained based on the first reference signal, the second reference signal received power value may be obtained based on the second reference signal, and the information related to a reference signal received power value may include information for the first reference signal received power value, information for the second reference signal received power value, information for the first spatial setting, and information for the second spatial setting.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: determining a first power value, based on a first reference signal received power value related to a first spatial setting; determining a second power value, based on a second reference signal received power value related to a second spatial setting; determining a greater value among the first power value and the second power value as a transmit power value; performing a first inter-UE transmission, based on the transmit power value and the first spatial setting; and performing a second inter-UE transmission, based on the transmit power value and the second spatial setting.

According to an embodiment of the present disclosure, a non-transitory computer-readable storage medium storing instructions may be proposed. For example, the instructions, based on being executed, may cause a first device to: determine a first power value, based on a first reference signal received power value related to a first spatial setting; determine a second power value, based on a second reference signal received power value related to a second spatial setting; determine a greater value among the first power value and the second power value as a transmit power value; perform a first inter-device transmission, based on the transmit power value and the first spatial setting; and perform a second inter-device transmission, based on the transmit power value and the second spatial setting.

FIG. 12 shows a procedure for performing wireless communication by a second device according to an embodiment of the present disclosure. The embodiment of FIG. 12 may be combined with various embodiments of the present disclosure.

Referring to FIG. 12, in step S1210, a second device may receive, from a first device, a first inter-device transmission based on a third spatial setting. In step S1220, the second device may receive, from the first device, a second inter-device transmission based on a fourth spatial setting. For example, the first inter-device transmission and the second inter-device transmission may be performed based on the same transmit power value, and the transmit power value may be a greater value among a first power value determined based on a first reference signal received power value related to a first spatial setting on which the first inter-device transmission is based and a second power value determined based on a second reference signal received power value related to a second spatial setting on which the second inter-device transmission is based.

For example, additionally, the second device may obtain a third reference signal received power value based on the third spatial setting and a first inter-device reference signal; and obtain a fourth reference signal received power value based on the fourth spatial setting and a second inter-device reference signal. For example, the first inter-device transmission may include a transmission of the first inter-device reference signal, and the second inter-device transmission may include a transmission of the second inter-device reference signal.

The above-described embodiment may be applied to various devices described below. For example, a processor 202 of a second device 100 may control a transceiver 206 to receive, from a first device 100, a first inter-device transmission based on a third spatial setting. And, the processor 202 of the second device 200 may control the transceiver 206 to receive, from the first device 100, a second inter-device transmission based on a fourth spatial setting. For example, the first inter-device transmission and the second inter-device transmission may be performed based on the same transmit power value, and the transmit power value may be a greater value among a first power value determined based on a first reference signal received power value related to a first spatial setting on which the first inter-device transmission is based and a second power value determined based on a second reference signal received power value related to a second spatial setting on which the second inter-device transmission is based.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: receiving, from a first device, a first inter-device transmission based on a third spatial setting; and receiving, from the first device, a second inter-device transmission based on a fourth spatial setting, wherein the first inter-device transmission and the second inter-device transmission may be performed based on the same transmit power value, and wherein the transmit power value may be a greater value among a first power value determined based on a first reference signal received power value related to a first spatial setting on which the first inter-device transmission is based and a second power value determined based on a second reference signal received power value related to a second spatial setting on which the second inter-device transmission is based.

For example, additionally, the instructions may further comprise: obtaining a third reference signal received power value based on the third spatial setting and a first inter-device reference signal; and obtaining a fourth reference signal received power value based on the fourth spatial setting and a second inter-device reference signal. For example, the first inter-device transmission may include a transmission of the first inter-device reference signal, and the second inter-device transmission may include a transmission of the second inter-device reference signal.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

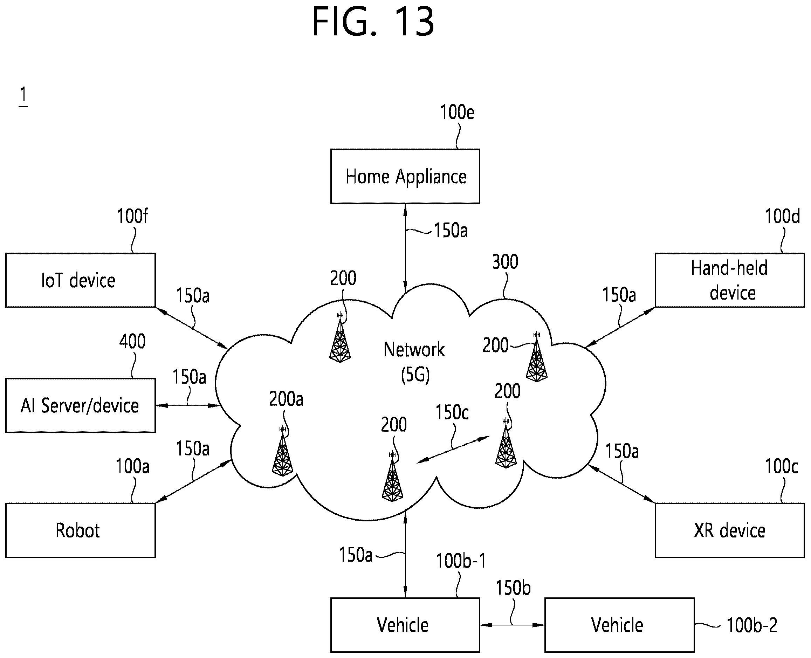

FIG. 13 shows a communication system 1, based on an embodiment of the present disclosure. The embodiment of FIG. 13 may be combined with various embodiments of the present disclosure.

Referring to FIG. 13, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

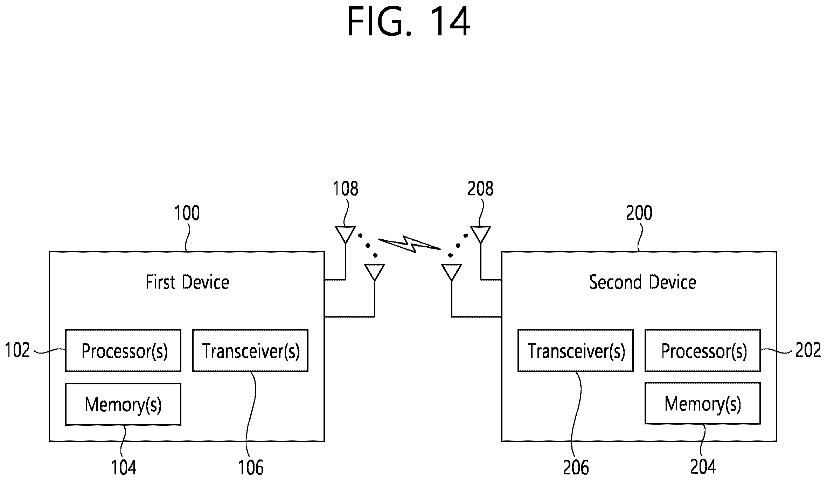

FIG. 14 shows wireless devices, based on an embodiment of the present disclosure. The embodiment of FIG. 14 may be combined with various embodiments of the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

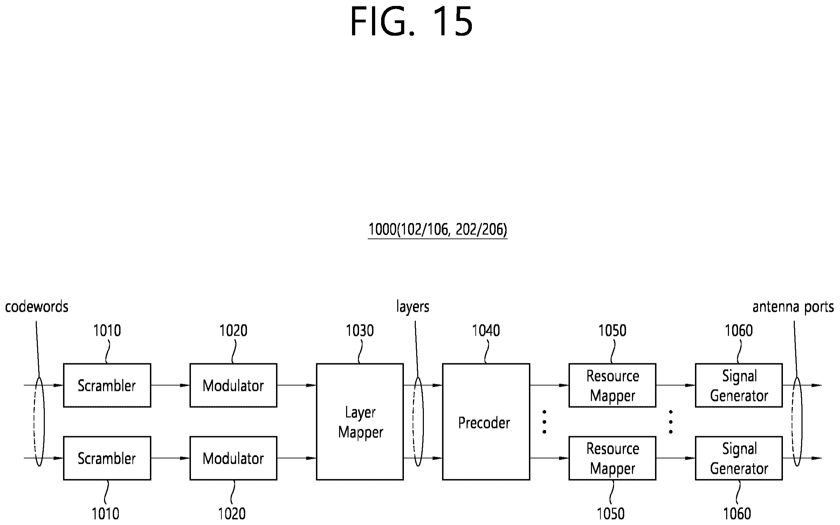

FIG. 15 shows a signal process circuit for a transmission signal, based on an embodiment of the present disclosure. The embodiment of FIG. 15 may be combined with various embodiments of the present disclosure.

Referring to FIG. 15, a signal processing circuit 1000 may include scramblers 1010, modulators 1020, a layer mapper 1030, a precoder 1040, resource mappers 1050, and signal generators 1060. An operation/function of FIG. 15 may be performed, without being limited to, the processors 102 and 202 and/or the transceivers 106 and 206 of FIG. 14. Hardware elements of FIG. 15 may be implemented by the processors 102 and 202 and/or the transceivers 106 and 206 of FIG. 14. For example, blocks 1010 to 1060 may be implemented by the processors 102 and 202 of FIG. 14. Alternatively, the blocks 1010 to 1050 may be implemented by the processors 102 and 202 of FIG. 14 and the block 1060 may be implemented by the transceivers 106 and 206 of FIG. 14.

Codewords may be converted into radio signals via the signal processing circuit 1000 of FIG. 15. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 15. For example, the wireless devices (e.g., 100 and 200 of FIG. 14) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

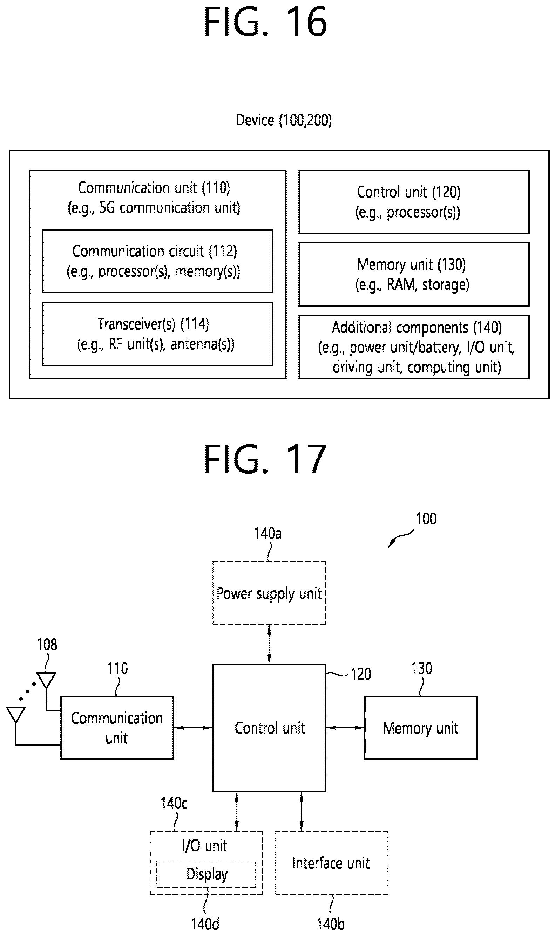

FIG. 16 shows another example of a wireless device, based on an embodiment of the present disclosure. The wireless device may be implemented in various forms according to a use-case/service (refer to FIG. 13). The embodiment of FIG. 16 may be combined with various embodiments of the present disclosure.

Referring to FIG. 16, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 16 will be described in detail with reference to the drawings.

FIG. 17 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless terminal (WT). The embodiment of FIG. 17 may be combined with various embodiments of the present disclosure.

Referring to FIG. 17, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 16, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

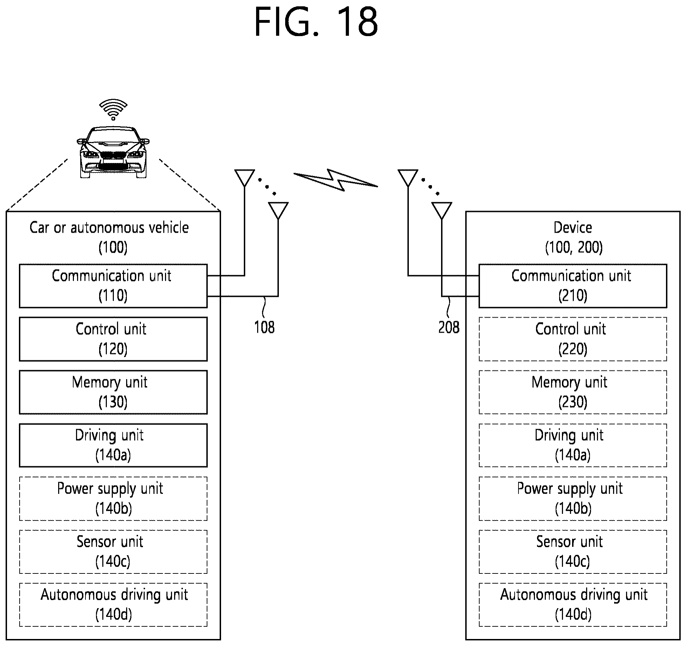

FIG. 18 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 18 may be combined with various embodiments of the present disclosure.

Referring to FIG. 18, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:
determining a first power value, based on a first reference signal received power value related to a first spatial setting;
determining a second power value, based on a second reference signal received power value related to a second spatial setting;
determining a greater value among the first power value and the second power value as a transmit power value;
performing a first inter-device transmission, based on the transmit power value and the first spatial setting; and
performing a second inter-device transmission, based on the transmit power value and the second spatial setting.

2. The method of claim 1, wherein the first power value is determined based on a first pathloss value related to the first spatial setting and the first reference signal received power value, and
wherein the second power value is determined based on a second pathloss value related to the second spatial setting and the second reference signal received power value.

3. The method of claim 2, wherein the first pathloss value is determined based on a first channel state information reference signal received based on the first spatial setting, and
wherein the second pathloss value is determined based on a second channel state information reference signal received based on the second spatial setting.

4. The method of claim 1, wherein the first reference signal received power value and the second reference signal received power value are L3 filtered values.

5. The method of claim 1, wherein the first inter-device transmission and the second inter-device transmission are performed at the same slot.

6. The method of claim 5, wherein the first inter-device transmission and the second inter-device transmission are transmitted based on time division multiplexing.

7. The method of claim 1, wherein the first reference signal received power value is determined based on a first beam process ID related to the first spatial setting, and
wherein the second reference signal received power value is determined based on a second beam process ID related to the second spatial setting.

8. The method of claim 1, wherein the first inter-device transmission and the second inter-device transmission are transmitted to a second device,
wherein the first inter-device transmission includes a first reference signal transmission based on the first spatial setting, and
wherein the second inter-device transmission includes a second reference signal transmission based on the second spatial setting.

9. The method of claim 8, wherein the first reference signal transmission is a first channel state information reference signal transmission or a first inter-device physical channel demodulation signal transmission, and
wherein the second reference signal transmission is a second channel state information reference signal transmission or a second inter-device physical channel demodulation signal transmission.

10. The method of claim 8, further comprising:
receiving, from the second device, information related to a reference signal received power value,
wherein the information related to a reference signal received power value includes information for a third reference signal received power value, information for a fourth reference signal received power value, information for a third spatial setting, and information for a fourth spatial setting.

11. The method of claim 10, wherein the third reference signal received power value is obtained based on the first reference signal transmission, received based on the third spatial setting, and
wherein the fourth reference signal received power value is obtained based on the second reference signal transmission, received based on the fourth spatial setting.

12. The method of claim 11, wherein the third reference signal received power value is obtained based on a third beam process ID related to the third spatial setting and the first reference signal transmission,
wherein the fourth reference signal received power value is obtained based on a fourth beam process ID related to the fourth spatial setting and the second reference signal transmission, and
wherein information related to a reference signal received power value includes information for the third beam process ID and information for the fourth beam process ID.

13. The method of claim 1, further comprising:
receiving, from a second device, a first reference signal based on the first spatial setting;
receiving, from the second device, a second reference signal based on the second spatial setting; and
transmitting, to the second device, information related to a reference signal received power value,
wherein the first reference signal received power value is obtained based on the first reference signal,
wherein the second reference signal received power value is obtained based on the second reference signal, and
wherein the information related to a reference signal received power value includes information for the first reference signal received power value, information for the second reference signal received power value, information for the first spatial setting, and information for the second spatial setting.

14. A first device for performing wireless communication, the first device comprising:
at least one transceiver;
at least one processor; and
at least one memory operably connected to the at least one processor and storing instructions that, based on being executed by the at least one processor, cause the first device to perform operations,
wherein the operations comprise:
determining a first power value, based on a first reference signal received power value related to a first spatial setting;
determining a second power value, based on a second reference signal received power value related to a second spatial setting;
determining a greater value among the first power value and the second power value as a transmit power value;
performing a first inter-device transmission, based on the transmit power value and the first spatial setting; and
performing a second inter-device transmission, based on the transmit power value and the second spatial setting.

15. A device adapted to control a first user equipment, UE, the device comprising:
at least one processor; and
at least one memory operably connected to the at least one processor and storing instructions that, based on being executed by the at least one processor, cause the first UE to perform operations,
wherein the operations comprise:
determining a first power value, based on a first reference signal received power value related to a first spatial setting;
determining a second power value, based on a second reference signal received power value related to a second spatial setting;
determining a greater value among the first power value and the second power value as a transmit power value;
performing a first inter-UE transmission, based on the transmit power value and the first spatial setting; and
performing a second inter-UE transmission, based on the transmit power value and the second spatial setting.

16. A non-transitory computer-readable storage medium storing instructions that, based on being executed, cause a first device to:
determine a first power value, based on a first reference signal received power value related to a first spatial setting;
determine a second power value, based on a second reference signal received power value related to a second spatial setting;
determine a greater value among the first power value and the second power value as a transmit power value;
perform a first inter-device transmission, based on the transmit power value and the first spatial setting; and
perform a second inter-device transmission, based on the transmit power value and the second spatial setting.

17. A method for performing, by a second device, wireless communication, the method comprising:
receiving, from a first device, a first inter-device transmission based on a third spatial setting; and
receiving, from the first device, a second inter-device transmission based on a fourth spatial setting,
wherein the first inter-device transmission and the second inter-device transmission are performed based on the same transmit power value, and
wherein the transmit power value is a greater value among a first power value determined based on a first reference signal received power value related to a first spatial setting on which the first inter-device transmission is based and a second power value determined based on a second reference signal received power value related to a second spatial setting on which the second inter-device transmission is based.

18. The method of claim 17, further comprising:
obtaining a third reference signal received power value based on the third spatial setting and a first inter-device reference signal; and
obtaining a fourth reference signal received power value based on the fourth spatial setting and a second inter-device reference signal,
wherein the first inter-device transmission includes a transmission of the first inter-device reference signal, and
wherein the second inter-device transmission includes a transmission of the second inter-device reference signal.

19. A second device for performing wireless communication, the second device comprising:
at least one transceiver;
at least one processor; and
at least one memory operably connected to the at least one processor and storing instructions that, based on being executed by the at least one processor, cause the second device to perform operations,
wherein the operations comprise:
receiving, from a first device, a first inter-device transmission based on a third spatial setting; and
receiving, from the first device, a second inter-device transmission based on a fourth spatial setting,
wherein the first inter-device transmission and the second inter-device transmission are performed based on the same transmit power value, and
wherein the transmit power value is a greater value among a first power value determined based on a first reference signal received power value related to a first spatial setting on which the first inter-device transmission is based and a second power value determined based on a second reference signal received power value related to a second spatial setting on which the second inter-device transmission is based.

20. The second device of claim 19, wherein the instructions further comprise:
obtaining a third reference signal received power value based on the third spatial setting and a first inter-device reference signal; and
obtaining a fourth reference signal received power value based on the fourth spatial setting and a second inter-device reference signal,
wherein the first inter-device transmission includes a transmission of the first inter-device reference signal, and
wherein the second inter-device transmission includes a transmission of the second inter-device reference signal.
